# DEMANDE DE BREVET EUROPEEN

(11) **EP 1 431 096 A2**
(43) Date de publication de la demande: **23.06.2004**
(21) Numéro de dépôt: 03028056.4
(22) Date de dépôt: 08.12.2003
(51) Int. Cl.: B60K 15/03

(54) **Réservoir pour le stockage à haute pression d'un carburant sur un véhicule**

(30) Priorité: 18.12.2002 FR 0216260
(71) Demandeur: Conception et Développement Michelin S.A., 1762 Givisiez (CH); PAUL SCHERRER INSTITUT, 5232 Villigen PSI (CH)
(72) Inventeur: Laurent, Daniel, 1723 Marly (CH); Walser, Daniel, 1700 Fribourg (CH); Olsommer, David, 1700 Fribourg (CH)
(74) Mandataire: Bauvir, Jacques

(57) **Abrégé**

La plate-forme structurelle (11) du véhicule comporte deux réservoir (T1) et (T2) pour le stockage sur un véhicule de fluides sous pression. Chaque réservoir comporte au moins un réseau de cellules (2) connectées entre elles via des orifices (3), les orifices étant conformés de façon à ce que le flux de fluide engendré par la consommation de fluide nécessaire à l'utilisation du véhicule ne présente que des pertes de charge n'affectant pas ladite utilisation, et étant conformés de façon à ce que, en cas de rupture d'une ou de quelques cellules (2), le flux de fuite provoque des pertes de charge suffisamment importantes pour en limiter le débit.

## Description

La présente invention se rapporte aux réservoirs de stockage de gaz dans un véhicule routier applicable quelle que soit sa motorisation, et notamment applicable pour le stockage d'hydrogène gazeux et/ou le stockage d'oxygène gazeux dans un véhicule à pile à combustible.

Un des problèmes que pose le stockage de gaz sur un véhicule est le danger d'explosion en cas d'accident du véhicule, en cas d'avarie sur le réservoir et/ou en cas d'élévation trop forte de la pression. On a déjà proposé pour les véhicules à gaz de pétrole liquéfié des soupapes de décharge afin de laisser fuir progressivement le gaz car il faut à tout prix éviter le risque d'explosion provoquée par la simple détente brutale d'une grande quantité de gaz comprimé. Si cette solution convient en cas d'élévation de pression due à un échauffement, elle n'est d'aucune utilité en cas de dommage direct causé au réservoir.

L'invention vise à apporter une solution pratique et universelle au problème de stockage d'un fluide à haute pression sur un véhicule.

Selon l'invention, le réservoir pour le stockage sur un véhicule d'un fluide à haute pression fait partie intégrante de la plate-forme structurelle du véhicule et comporte au moins un réseau comportant un grand nombre de cellules toutes en communication par des interconnexions, les interconnexions étant conformées de façon à ce que le flux de fluide engendré par la consommation de fluide nécessaire à l'utilisation du véhicule ne présente que des pertes de charge n'affectant pas ladite utilisation, et étant conformées de façon à ce que, en cas de rupture d'une ou de quelques cellules, le flux de fuite provoque des pertes de charge suffisamment importantes pour en limiter le débit.

La plate-forme constitue une structure portante et travaillante du véhicule. De la sorte, on combine harmonieusement une finalité mécanique et une finalité de stockage présentant une sécurité très nettement améliorée par rapport aux bouteilles habituellement utilisées pour stocker sous pression un fluide, ce qui permet de construire une plate-forme suffisamment rigide et offrant un volume cumulé suffisant. Les interconnexions permettent la circulation du gaz d'une cellule vers l'autre, mais à débit fortement limité. De la sorte, la circulation de gaz nécessaire au fonctionnement normal du véhicule n'est pas affectée car le débit de passage d'une cellule à une autre nécessaire au fonctionnement normal du véhicule est faible, ce qui n'engendre que des pertes de charges très faibles, parfaitement compatibles avec le fonctionnement normal. Dans l'exemple illustrant l'invention et décrit plus en détail ci-dessous, chaque interconnexion est formée par un orifice. L'orifice est bien entendu de petite taille pour remplir la fonction exposée ci-dessus. Mais on pourrait envisager d'autres solutions, comme un matériau poreux dans une partie au moins de la paroi entre cellules.

En cas d'accident, si une ou plusieurs des cellules se trouvait à être percées, seule la quantité de gaz contenue dans cette cellule pourrait s'échapper rapidement à l'atmosphère, le gaz contenu dans toutes les autres cellules pouvant certes s'échapper, mais à débit fortement réduit par les pertes de charges entre les différentes cellules. De cette façon, on évite la libération rapide d'une quantité importante de gaz en cas d'endommagement du réservoir.

Dans un véhicule à pile à combustible stockant l'hydrogène nécessaire au fonctionnement de la pile, on peut appliquer ce schéma de réalisation aussi bien pour un réservoir d'hydrogène que pour un réservoir d'oxygène. Bien entendu, ce schéma de réalisation peut être aussi appliqué pour un réservoir d'hydrogène seulement, par exemple dans le cas où l'oxygène nécessaire au fonctionnement de la pile lui est fourni en comprimant l'air ambiant.

Dans une réalisation particulièrement avantageuse, notamment pour limiter le poids du véhicule, la plate-forme structurelle forme un plancher, différents organes dudit véhicule étant montés sur ce plancher. Cette disposition particulière de l'invention est bien entendu applicable à tous les types de véhicules dès lors qu'il est nécessaire de stocker un fluide à haute pression, comme par exemple un véhicule à moteur thermique fonctionnant au gaz de pétrole liquéfié, même si l'on a choisi d'illustrer l'invention par un véhicule à pile à combustible, le choix particulier n'ayant bien entendu aucun caractère limitatif.

Sur les figures suivantes :
- La figure 1 montre un véhicule de tourisme ;
- La figure 2 illustre une phase de fabrication du plancher du véhicule montré à la figure 1 ;
- La figure 3 est une coupe selon IV-IV à la figure 3 ;
- La figure 4 montre un agrandissement de la partie pointée par la flèche A à la figure 1 ;
- La figure 5 montre une variante de réalisation ;
- La figure 6 est une vue en plan d'une autre variante de réalisation du plancher selon l'invention.

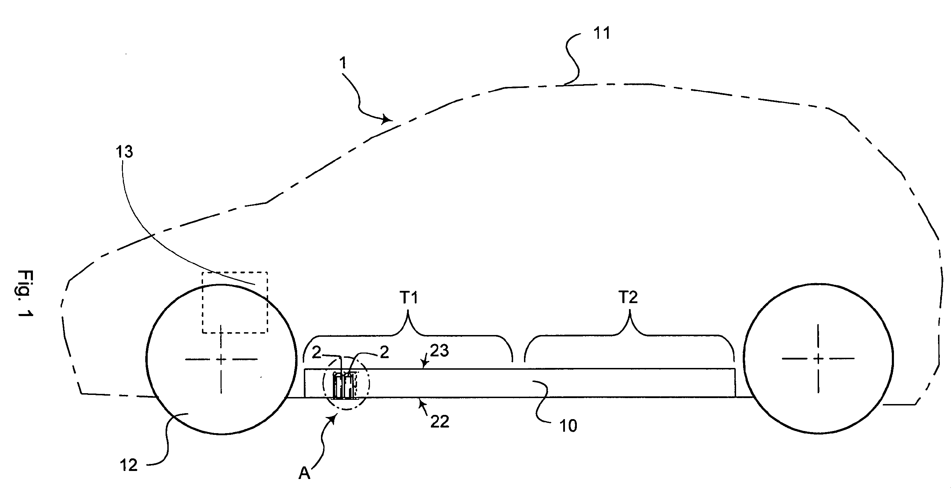

A la figure 1, on voit un véhicule de tourisme 1 dont la plate-forme portante forme un plancher 10. On voit également une caisse 11 rendue solidaire du plancher 10 afin de présenter une résistance mécanique d'ensemble. Tous les organes mécaniques ainsi que les ouvrants du véhicule et l'habillage intérieur sont montés sur cette structure portante, dont notamment des roues 12 et une pile à combustible 13. Le plancher est conçu pour non seulement former une partie de la structure portante du véhicule mais aussi pour intégrer au moins un réservoir pour le stockage sur le véhicule d'un gaz sous pression. Il peut s'agir de n'importe quel fluide stocké à haute pression, par exemple du gaz de pétrole liquéfié, du gaz naturel comprimé ou de l'hydrogène comprimé ou de l'oxygène comprimé.

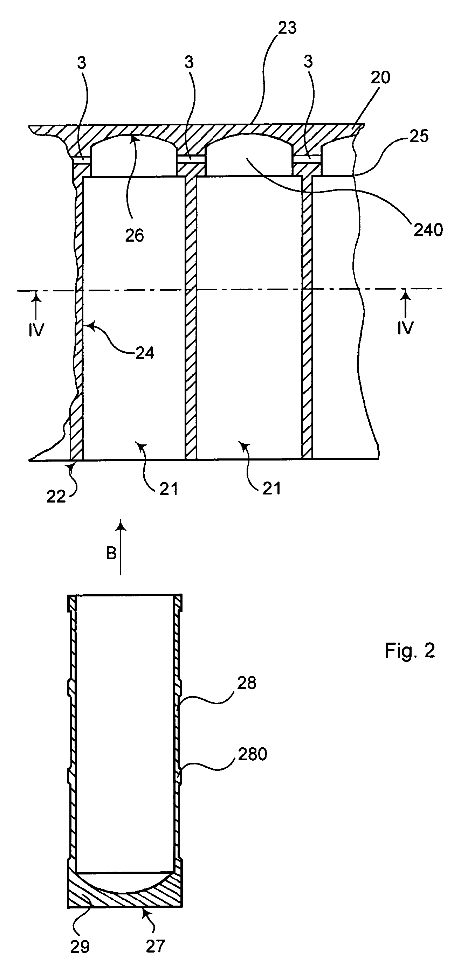

Chaque réservoir comporte un très grand nombre de cellules 2 de petit volume, reliées entre elles, par des orifices 3 bien visibles aux figures 2 à 4. De préférence, on envisage que le réservoir comporte au moins cent, par exemple de l'ordre de mille cellules 2 connectées entre elles. On peut envisager la fabrication industrielle d'un réservoir comportant jusqu'à cent mille cellules 2 connectés entre elles.

En cas de destruction d'une ou de plusieurs cellules 2, par exemple suite à un choc dû par exemple à un accident, la ou les cellules détruites passent immédiatement à la pression atmosphérique. Cependant, grâce à la résistance des parois des cellules adjacentes à la cellule détruite ou aux cellules détruites, la destruction d'une ou de quelques cellules ne provoque aucune autre rupture en cascade. Le fluide reste momentanément contenu, sous pression lentement décroissante, dans les cellules intactes adjacentes. Le débit de fuite des cellules intactes vers la ou les cellules détruites est fortement limité par la présence des orifices. On sait notamment que la vitesse d'écoulement d'un gaz au travers d'un orifice est plafonnée à la vitesse du son, à partir d'un certain rapport des pressions régnant des deux côtés de l'orifice, et que la vitesse n'augmente pas même si le rapport de pression s'accroît.

Soulignons ici une caractéristique de dimensionnement importante : toutes les parois de chaque cellule 2 doivent être capable de résister à elles seules à la pression de stockage du fluide. Ceci n'exclut pas que, en cas d'avarie survenant au sein du réseau de cellules, les parois des cellules adjacentes se déforment sous l'effet de la pression interne. Un dépassement de la limite élastique est acceptable, mais bien entendu pas un dépassement de la limite de rupture.

Bien entendu, on n'évitera pas que le réservoir ne se vide totalement. Cependant, pour une masse d'hydrogène stockée de l'ordre de quelques kilogrammes, en cas de destruction d'une ou de plusieurs cellules, on peut allonger jusqu'à plusieurs minutes le temps nécessaire pour vider le réservoir. L'effet d'explosion est ainsi évité.

Même si cette conception conduit à augmenter le volume global nécessaire pour stocker une masse donnée de gaz à une pression donnée, cela n'augmente pas proportionnellement le poids du réservoir et cela permet vraiment de faire du réservoir une partie de la structure travaillante du véhicule, ce qui est intéressant pour le bilan global de la masse du véhicule.

Le plancher 10 intègre un réservoir T1 à cellules 2 communicantes, pour le stockage d'hydrogène gazeux. Le véhicule illustrant l'invention est un véhicule à pile à combustible stockant non seulement l'hydrogène dont il a besoin mais également l'oxygène sous forme de gaz comprimé. Dans ce cas, on peut préférer stocker l'oxygène gazeux dans un réservoir indépendant de la plate-forme du véhicule, par exemple un réservoir formé pour une ou plusieurs bouteilles de technologie classique.

Il est également possible que le plancher 10 du véhicule intègre plusieurs réservoirs, par exemple deux réservoirs indépendants pour le stockage de deux gaz différents, chacun des réservoirs ayant les caractéristiques de l'invention, comme on va l'expliquer ci-dessous. Il est éventuellement envisageable de stocker à la fois l'hydrogène et l'oxygène moyennant un choix judicieux de matière pour la réalisation du plancher formant plate-forme (matière non propagatrice de flamme) et de préférence moyennant d'autres précautions qui vont être expliquées.

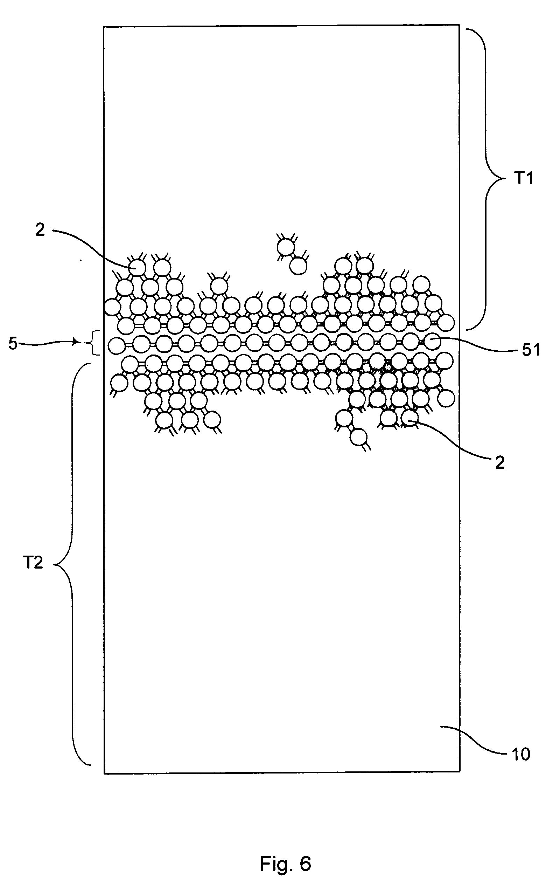

A la figure 6, on voit une première zone du plancher 10 forme le réservoir T1 pouvant stocker de l'hydrogène. Une deuxième zone du plancher 10 forme un second réservoir T2 à cellules 2 communicantes, et bien entendu non communicantes avec les cellules 2 du réservoir T1, le réservoir T2 pouvant stocker de l'oxygène.

De préférence, entre le réservoir T1 et le réservoir T2, on laisse une zone dépourvue de cellules de largeur importante, ou pourvue de cellules mortes non communicantes ou remplies de gaz neutre par exemple comparable à l'épaisseur totale de la base, afin de limiter le risque de formation d'un mélange d'hydrogène et d'oxygène, ce mélange étant explosif. En variante de la représentation schématique de la figure 1, un côté du plancher peut être réservé sur toute sa longueur à un réservoir, par exemple pour l'oxygène, et l'autre côté du plancher réservé sur toute sa longueur à un réservoir, par exemple pour l'hydrogène, les deux réservoirs pouvant bien entendu être séparés par une zone de séparation 5 dépourvue de cellules, ladite zone de séparation étant de largeur suffisamment importante, ou pourvue de cellules non communicantes 51 avec les cellules des réservoirs adjacents, lesdites cellules étant mises en communication avec l'atmosphère ou étant remplies de gaz neutre, éventuellement sous pression, le cas échéant sous pression supérieure à la pression des fluides dans les réservoirs T1 et T2. Ainsi, on limite considérablement les risques de formation d'un mélange d'oxygène et d'hydrogène en cas de choc latéral. De préférence, le plancher ne dépasse pas la longueur comprise entre les essieux, et est protégé à l'avant et à l'arrière du véhicule et de préférence aussi latéralement par des zones d'absorption de choc par déformation.

Afin de favoriser la résistance des cellules, il est intéressant que leur forme se rapproche de la forme habituellement retenue pour les bouteilles de stockage de gaz sous pression. Par exemple, chaque cellule comporte avantageusement une partie centrale dont la paroi est sensiblement cylindrique et deux parties d'extrémité formant une paroi s'inscrivant dans une sphère.

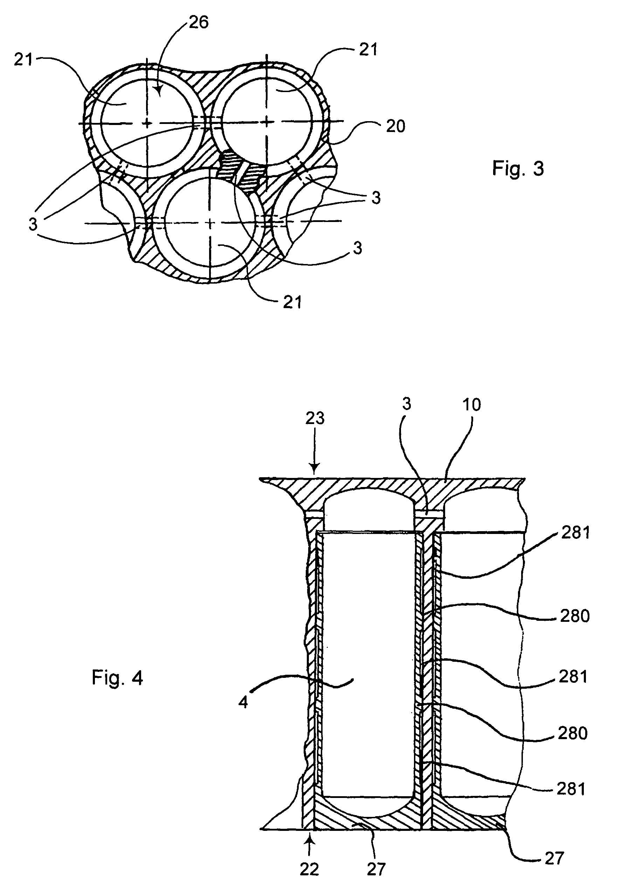

On décrit maintenant comment on peut réaliser un tel réservoir, avec à l'appui de cette description les figures 3 et 4. Le plancher est réalisé à partir d'un bloc (de préférence en aluminium dans le cas d'une plate-forme intégrant seulement un réservoir d'hydrogène) de forme et de volume convenables, correspondant aux caractéristiques finales du plancher. Le bloc a une forme aplatie ayant une première face 22 et une face opposée 23 sensiblement parallèle à la première face. Ce bloc est destiné à former, par exemple par usinage, une base 20 qui comporte autant d'évidements 21 que de cellules. Les évidements 21 s'étendent tous depuis une première face 22 vers la face opposée 23. Ils sont tous débouchant à la première face 22 et non débouchant à la face opposée 23. Chaque évidemment 21 comporte une première partie 24 de forme sensiblement cylindrique s'étend entre la première face 22 et un niveau intermédiaire 25 situé entre la première face 22 et la face opposée 23. Chaque évidemment 21 comporte une deuxième partie 240 prolongeant la première et comportant une paroi 26 formant une calotte, dont la forme de détail est bien connue des spécialistes des récipients sous pression. Les orifices 3 se situent dans cette deuxième partie 26.

A la figure 2, on voit un couvercle 27. On utilise autant de couvercles 27 qu'il y a d'évidements. Chaque couvercle comporte un tronc 28 dont la paroi est sensiblement cylindrique. A la surface extérieure du tronc 28, on voit des nervures 280. Le diamètre extérieur du tronc 28 est plus petit ou égal au diamètre intérieur de la première partie 24 des évidements 21. Chaque couvercle 27 comporte un fond 29 dont la paroi interne forme une calotte. Tous les couvercles 27 sont introduits dans les évidements, en encollant les surfaces à coller. Les nervures 280 évitent que toute la colle soit raclée et assurent l'accumulation de colle dans les petits volumes 281 (voir figure 4). Cela permet de fermer les évidements 21 de façon étanche, créant ainsi les cellules 2. Les nervures 280 montrées ci-dessus sur le couvercle pourraient au lieu de cela être réalisées sur la paroi de la première partie 24 des évidements 21. Dans ce dernier cas, on peut prévoir de solidariser les couvercles par déformation de ses parois sous l'effet d'une forte pression interne.

A la figure 3, on voit que chaque cellule 2 est connectée à toutes les cellules adjacentes. Soulignons que ceci n'est pas du tout impératif, toutes les combinaisons de connexion pouvant être envisagées entre ce qui est montré aux figures et seulement les connexions nécessaires pour brancher les cellules en série. A la figure 4, on voit une coupe partielle du plancher 10 montrant en détail les cellules 2 interconnectées par les orifices 3.

On a cité l'usinage pour réaliser la base 20. Cependant, celle-ci ou au moins une ébauche de celle-ci pourrait être réalisée par fonderie, notamment une fonderie à la cire perdue.

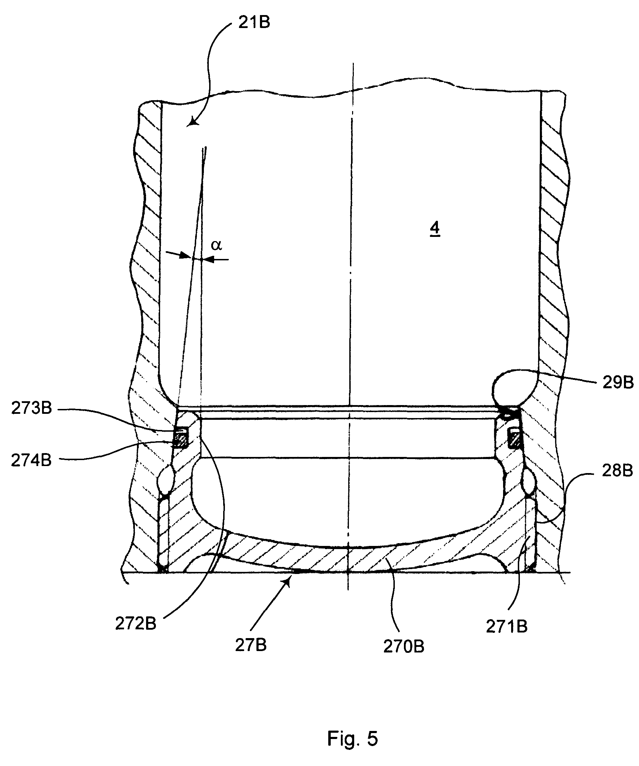

En variante, comme montré à la figure 5, on peut utiliser des couvercles 27B vissés dans des évidements 21B. Dans ce cas, les parois de la première partie des évidements 21B comportent un filetage 28B. Au delà du filetage, les parois comportent une portée tronconique 29B d'angle α. Le couvercle 27B comporte une tête 270B, une bordure 271B filetée, et une jupe 272B dont la surface extérieure est également tronconique au même angle α. La jupe 272B comporte une gorge 273B recevant un joint d'étanchéité 274B. Entre la tête 270B et la jupe 272B, la paroi du couvercle 27B est amincie, de façon à ce que la jupe soit d'autant plus ferment plaquée contre la surface de la portée tronconique 29B que la pression régnant à l'intérieur de la cellule 4 est élevée. On évite ainsi le problème de l'extrusion du joint. On pourrait également utiliser une colle dans le filetage pour solidariser la base et les couvercles définitivement et de façon étanche.

Enfin, bien entendu, on peut faire remarquer que la vitesse de remplissage d'un réservoir selon l'invention sera comparable à la vitesse à laquelle celui-ci se vide lors d'un accident. Le choix de connexions montré aux figures contribue à un temps de remplissage court, toutes autres choses égales par ailleurs. Si l'on veut remplir un tel réservoir plus rapidement sans diminuer aussi le temps de vidage, on peut prévoir un dispositif alimentant en parallèles plusieurs cellules non adjacentes, par des orifices spécifiques, le dispositif étant pourvu de soupapes qui assurent l'étanchéité après le remplissage.

Parmi les variantes de réalisation, signalons encore que les cellules pourraient ne pas être interconnectées avec toutes les cellules adjacentes. Le réservoir pourrait comporter un réseau de cellules connectées seulement en série, ou plusieurs réseaux de cellules connectées en série, les réseaux étant connectés en parallèle.

## Revendications

1. Plate-forme structurelle (10) pour véhicule automobile, formant un réservoir (T1) pour le stockage sur le véhicule d'un fluide sous pression, ledit réservoir comportant au moins un réseau de cellules (2) connectées entre elles via des interconnexions, les interconnexions étant conformées de façon à ce que le flux de fluide engendré par la consommation de fluide nécessaire à l'utilisation du véhicule ne présente que des pertes de charge n'affectant pas ladite utilisation, et étant conformées de façon à ce que, en cas de rupture d'une ou de quelques cellules, le flux de fuite provoque des pertes de charge suffisamment importantes pour en limiter le débit.

2. Plate-forme structurelle selon la revendication 1, comportant au moins un réseau d'au moins cent et au plus cent mille cellules (2) connectées entre elles via des interconnexions.

3. Plate-forme structurelle selon la revendication 1 ou 2, chaque interconnexion étant formée par un orifice (3).

4. Plate-forme structurelle selon l'une des revendications précédentes, dans lequel chaque cellule comporte une partie centrale dont la paroi est sensiblement cylindrique et une calotte à chaque extrémité.

5. Plate-forme structurelle selon l'une des revendications précédentes, comportant plusieurs réseaux de cellules connectées en série, les réseaux étant connectés en parallèle.

6. Plate-forme structurelle selon l'une des revendications précédentes, comportant un dispositif alimentant en parallèles plusieurs cellules non adjacentes, par des orifices spécifiques, le dispositif étant pourvu de soupapes qui assurent l'étanchéité après le remplissage.

7. Plate-forme structurelle selon l'une des revendications précédentes, intégrant un deuxième réservoir indépendant pour le stockage d'un autre fluide différent.

8. Plate-forme structurelle selon la revendication 7, dans laquelle le deuxième réservoir (T2) comporte au moins un réseau de cellules (2) connectées entre elles via des interconnexions, les interconnexions étant conformées de façon à ce que le flux de fluide engendré par la consommation de fluide nécessaire à l'utilisation du véhicule ne présente que des pertes de charge n'affectant pas ladite utilisation, et étant conformées de façon à ce que, en cas de rupture d'une ou de quelques cellules, le flux de fuite provoque des pertes de charge suffisamment importantes pour en limiter le débit.

9. Plate-forme structurelle selon l'une des revendications 7 ou 8, comportant une base (20) qui comporte autant d'évidements (21) que de cellules (2), la base ayant une forme aplatie ayant une première face (22) et une face opposée (23) sensiblement parallèle à la première face, les évidements s'étendant tous depuis la première face vers la face opposée et étant tous débouchant à la première face et non débouchant à la face opposée, chaque évidemment étant fermé par un couvercle (27) solidarisé de façon étanche pour former une cellule, lesdits orifices étant aménagés dans la base pour mettre les évidements en communication.

10. Plate-forme structurelle selon la revendication 9 dans lequel chaque évidemment comporte une première partie (24) de forme sensiblement cylindrique, s'étendant entre la première face (22) et un niveau intermédiaire (25) situé entre la première face et la face opposée, chaque évidemment comportant une deuxième partie (240) prolongeant la première et comportant une paroi (26) formant une calotte.

11. Plate-forme structurelle selon la revendication 9, dans lequel chaque couvercle (27) comporte un tronc (28) dont la paroi est sensiblement cylindrique et de diamètre extérieur plus petit ou égal au diamètre intérieur de la première partie de chaque évidemment, chaque couvercle (27) comportant un fond (29), tous les couvercles étant insérés et collés dans les évidements.

12. Plate-forme structurelle selon la revendication 9, dans lequel chaque couvercle (27B) est vissé dans des évidements (21B), avec interposition d'un joint d'étanchéité (274B).

13. Plate-forme structurelle selon l'une des revendications 8 à 12 dans laquelle, entre le réservoir (T1) et le réservoir (T2), on laisse une zone de séparation (5) dépourvue de cellules.

14. Plate-forme structurelle selon l'une des revendications 8 à 12 dans laquelle, entre le réservoir (T1) et le réservoir (T2), on laisse une zone de séparation (5) pourvue de cellules non communicantes (51) avec les cellules des réservoirs adjacents.

15. Véhicule équipé d'une plate-forme structurelle (10) selon l'une des revendications 1 à 14, le plancher formant au moins partiellement une structure portante sur lequel sont montés différents organes dudit véhicule.

16. Véhicule selon la revendication 15, comportant une pile à combustible, le réservoir intégré à la plate-forme structurelle assurant le stockage d'hydrogène gazeux.

17. Véhicule selon la revendication 16, comportant une pile à combustible (13) et deux réservoirs (T1 et T2) intégrés à la plate-forme structurelle, l'un des réservoirs assurant le stockage d'hydrogène gazeux et l'autre des réservoirs assurant le stockage d'oxygène gazeux.
